# EUROPEAN PATENT APPLICATION

(11) **EP 1 109 375 A2**
(43) Date of publication of application: **20.06.2001**
(21) Application number: 00127403.4
(22) Date of filing: 14.12.2000
(51) Int. Cl.: H04L 29/12, H04L 29/06

(54) **Improvements in or relating to long latency or error prone links**

(30) Priority: 18.12.1999 GB 9929884; 06.10.2000 GB 0024466
(71) Applicant: ROKE MANOR RESEARCH LIMITED, Romsey, Hampshire SO51 0ZN (GB)
(72) Inventor: West, Mark Alan, North Baddesley, Southhampton, S051 9NT (GB); Hancock, Robert, Bitterne Park, Southampton, SO18 1NW (GB); Vickers, Steve, Southampton, SO17 2NF (GB)
(74) Representative: Condon, Neil

(57) **Abstract**

Described herein is a method for improving the performance of long latency or error prone links without reconfiguration. A host (10) is connected to an external network (20) by means of a satellite connection (30). A first router (40) and a first transparent cache (60) are associated with the host (10). Similarly, a second router (50) and a second transparent cache (70) are associated with the external network (20). When the host (10) sends a domain name server query, it is intercepted by the first router (40) and sent to the first transparent cache (60). If the first transparent cache (60) has the answer, it is passed back to the host (10) via the first router (40). If the first transparent cache (60) does not have the answer, the first router (40) passes the query to the second router (50) via the satellite (30) which passes it onto the second transparent cache (70) which supplies the answer if it has it. Otherwise, the router (50) passes the query to the external network (20). Once an answer has been found by the external network (20), it is passed back to the host (10) via the routers (40, 50) and the satellite (30) and is stored in the first transparent cache (60) for future use.

## Description

The present invention relates to improvements in or relating to long latency or error prone links, particularly, long latency or error prone links between a host and an external network.

Traditional domain name system (DNS) caches operate in the following manner: a machine wishing to resolve a DNS name (e.g. www.anonymous.com) into an internet protocol (IP) address (e.g. 172.16.1.1) will have been configured to send all queries to one or more specific DNS name-servers. If the name server cache holds the answer, it will respond directly. If it does not have the answer then it will either return the address of or forward the query to the name-server that has more local knowledge of the name being queried. Name servers must be initialised with sufficient information to allow them to pursue a query from first principles.

Whenever a host needs to perform some look-up on DNS data it invokes a local library known as a 'resolver' to process the query. The resolver will have been configured with the address of one or more DNS name-servers. Typically the resolver will generate a query to the name-server and wait for a response.

However, in some instances the local DNS name server cannot respond to the query originating from its associated host and the query is answered by the next server in the network which is positioned at the other end of a long latency link, for example, a geostationary satellite link. In this case, the minimum time for the DNS lookup is related to a minimum round trip time, for example, 560ms, and the local host has to wait for the response before any IP session traffic can be correctly connected to its intended destination.

It is therefore an object of the present invention to provide an enhanced link without having to reconfigure the host.

In accordance with one aspect of the present invention, there is provided a method for improving the performance of long latency or error prone links between a host and an external network, the method comprising the steps of:-
a) generating a domain name server query at the host;
b) intercepting the domain name server query;
c) passing the query to a transparent cache;
d) if the answer to the domain name server query is available in the cache, supplying the answer to the host as if from the requested domain name server;
e) if the answer is not available in the cache, routing the request to the requested domain name server;
f) receiving a response at the cache from the domain name server;
g) supplying the response to the host; and
h) storing the response in the transparent cache.

It will be appreciated that the term 'host' may refer either to a single device or to a network from which the query originates.

It is preferred that step f) further comprises the steps of:-
(i) determining if the response received at the cache provides a complete answer;
(ii) generating a follow up query if the response is not a complete answer; and
(iii) repeating steps (i) and (ii) until a substantially complete answer is obtained.

Steps b) and c) are preferably carried out by a router associated with the host.

The method further comprises the step of associating a router and transparent cache with the external network, the transparent caches operating as co-operative pairs.

For a better understanding of the present invention, reference will now be made, by way of example only, to the accompanying drawings in which:-
Figure 1 illustrates a name-server response over a long latency link;
Figure 2 illustrates transparent cache pairing in accordance with the present invention; and
Figure 3 illustrates a transparent cache with a router as a controller in accordance with the present invention.

The present invention will be described with reference to a long latency link between a host and an external network - the host may itself form part of a network. However, it will be appreciated that the present invention is equally applicable to other error prone links, for example, those which are likely to be corrupted or which are likely to suffer from packet drop.

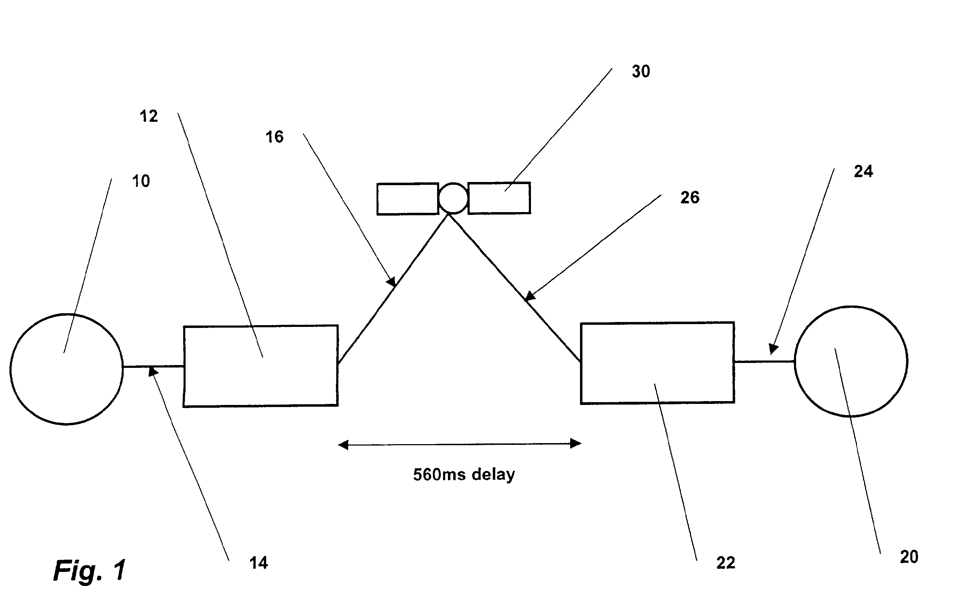

Referring initially to Figure 1, a long latency link is shown in which a host 10 is connected to an external network 20 by means of a satellite 30. The host 10 is connected to the satellite 30 by means of a first DNS server 12 via link 14 and a first satellite link 16. The external network 20 is connected to the satellite 30 by means of a second DNS server 22 via link 24 and a second satellite link 26. Satellite links 16 and 24 effectively comprise a single radio link via the satellite 30 as far as the host 10 and external network 20 are concerned. First DNS server 12 is the local server associated with the host 10. Second DNS server 22 comprises the next available server, which in this case, is associated with the external network 20. It will be appreciated that next available server may not be associated with the external network 20, but with an intermediate stage between the host 10 and the network 20.

The term 'server' is used herein to encompass non-caching devices and/or routers.

The situation shown in Figure 1 illustrates the case where the local DNS server 12 cannot respond to the DNS query originating from the host 10. The query is answered by the next server in the network, DNS server 22, which is positioned at the other end of a long latency link, for example, a geostationary satellite link which comprises a single radio link as illustrated by first and second satellite links 16, 26 and the satellite 30. It will be appreciated that the response to the query from the host 10 therefore takes a minimum of a round trip time of typically around 560ms. As described above the host 10 must wait for this response before any IP session traffic can be correctly connected to its intended destination.

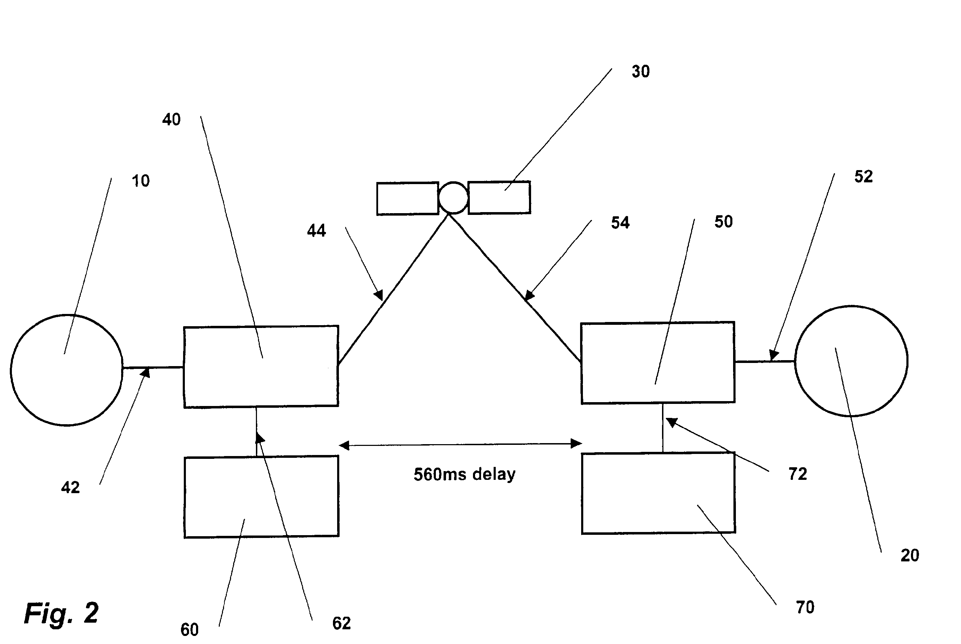

Figure 2 illustrates an improvement in accordance with the present invention. Again, host 10 is connected to an external network 20 by means of satellite 30, but this time the host 10 is connected to the satellite 30 by means of a first router 40 via link 42 and a first satellite link 44. The external network 20 is connected to the satellite 30 by means of a second router 50 via link 52 and a second satellite link 54. As described above with reference to Figure 1, the satellite links 44, 54 and the satellite 30 can be considered to comprise a single radio link between the first router 40 and the second router 50.

The first router 40 is also connected to a first transparent cache 60 via a logical link 62. Similarly, the second router 50 is also connected to a second transparent cache 70 via a logical link 72. Each of the transparent caches 60, 70 comprises a caching only name-server and has no domain of its own to administer.

A caching only name-server caches results of queries and answers from the cache if it can, or follows its list of alternate name-servers to pursue the query. In normal DNS, having set up a caching only name-server, all resolvers would have to be reconfigured to use this caching only name-server as the primary contact to resolve a domain name. Additionally, the cache itself would require a list of root name-servers to use as the basis for answering any query which was not in its cache - the transparent solution uses the name-server information in the original query for this, avoiding this configuration. A transparent cache uses a lightly modified caching-only name-server and a spoofing agent to avoid having to make any modifications to resolver configurations.

By situating a pair of transparent caches 60, 70 either side of a long-latency link as shown in Figure 2, the effect of the link upon DNS lookup time can be significantly reduced. The major benefit over the use of normal DNS caching name-servers is that this benefit can be achieved without having to reconfigure the DNS querying behaviour of any machine either side of the link, that is, the host 10 or the external network 20, and without having to provide any name-server information to the caches 60, 70.

It will be appreciated that, from a single name query performance perspective, there is no difference between the arrangements shown in Figures 1 and 2. In both cases, the first query on a new name may require a long latency look-up. However, once this has been done, subsequent look-ups will be optimally fast. The difference between the conventional arrangement shown in Figure 1 and the arrangement of the present invention as shown in Figure 2 is that the transparent caches 60, 70 require no initialisation data and resolvers (not shown) located within the host 10 and the external network 20 require no reconfiguration.

As shown in Figure 2, each transparent cache 60, 70 is co-located with a network router 40, 50 at each end of the long latency link. The first router 40 intercepts any DNS query from the host 10 that would normally cross the long latency link and passes it to its associated (first) transparent cache 60. The first transparent cache 60 will, if it has an answer, respond as if, from the requested name-server (this is referred to as 'spoofing'), directly to the host 10. In this way, the first transparent cache 60 acts as a local mirror to the requested name-server.

If the first transparent cache 60 does not have an answer, it will allow the query to proceed via the satellite 30 to the originally requested name-server and cache the response that comes back for future use.

The second router 50 may also intercept the query and pass it to its associated (second) transparent cache 70. If the second transparent cache 70 has the answer, it is relayed back to the host 10 via routers 50 and 40 and stored in cache 60. If the second transparent cache 70 does not have the answer, then the query is routed to the external network 20.

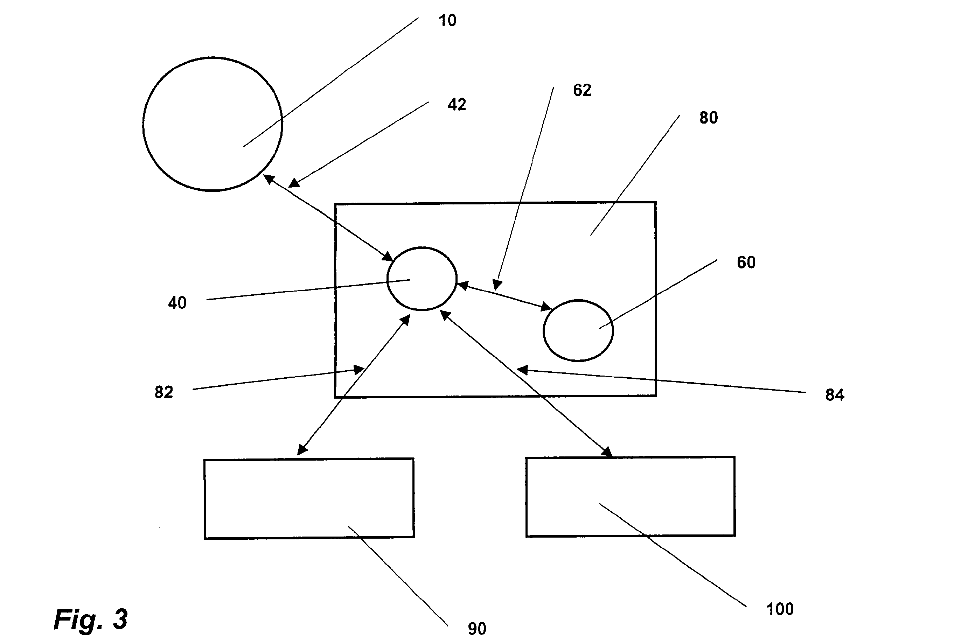

It will be appreciated that DNS requests are intercepted and managed within the transparent cache 60 without the knowledge or involvement of the host 10. Naturally, if there are several hosts connected to an external network, each transparent cache associated with a particular network will intercept and manage DNS requests without the knowledge or involvement of the hosts. This interception and management is done by controlling requests through the router 40 as described with reference to Figure 3.

Components which have been previously been described are referenced alike.

For the transparent cache 60 to do the work, a DNS request from the host 10 is trapped by a DNS interceptor 80 destined for a remote name-server 90 or 100 as shown in Figure 3. As shown, the DNS interceptor 80 comprises the first router 40 and the first transparent cache 60. The request is then locally regenerated to the transparent cache 60 that will provide the router 40 with an answer directly from the cache, if it has one. If the transparent cache 60 cannot supply an answer, the routing software handles the negative response. In this case, the query is passed either to a partner transparent cache or to the name-server specified in the original query.

Server 90 may comprise a paired router, that is, a router which is paired with the router 40 and server 100 may comprise a destination name-server and *vice versa.* In the particular embodiment described with reference to Figure 3, server 90 comprises a paired router and server 100 the destination name-server.

The router 40 decides (based on the IP address of the name-server) whether to forward the request to the paired transparent cache (not shown) on the paired router, that is, name server 90, via link 82, or directly to the destination name-server, that is, name-server 100, via link 84. Any response is then passed back to the transparent cache 60. In this manner, the router 40 manages the passage of the query, isolating the transparent cache 60 from direct interactions with other name-servers 90, 100.

It is to be noted that one of the name-servers 90, 100 to which the query is passed could be in the external network 20 as described in Figure 2. If this query is passed to the transparent cache (not shown) in the paired router (also not shown), at the other end of the long latency link, then this is an example of the paired transparent caches working co-operatively.

On the assumption that once a name-server has been identified in the external network, follow-up queries are more likely to be in the same network, the co-operative approach, that is, where the query may be passed from the transparent cache on one router to the other transparent cache of a paired router, offers better performance than transparent caches working independently.

However, if the transparent cache in a local network passes a query to its distant partner, it does so because the name-server that it wants to query is in the external or remote network. If, on receipt of the query, the distant partner transparent cache decides to use a name-server in the originating local network, it will then pass the query back - leading to infinite recursion.

The use of co-operative pairs allows each router more control over the query, and this allows it to work around any problems associated with infinite recursion. If the router notices that the query from the transparent cache is being directed at a name-server on the remote network, but is identical to the original query to the transparent cache, it can infer that a loop has been introduced. In this case, the query should be passed to the name-server in the remote network directly, and not to the partner router. This will impact performance, but the possibility of recursion is unlikely to happen frequently, and is robust.

DNS queries can be handled in two ways by a name-server. The querying host 10 may ask for recursion or not via a recursion desired (RD) flag. If recursion is desired, it will only be acted upon if the name-server supports recursion. This is indicated in the response via a recursion available (RA) flag. Thus recursion will only occur if it is both desired and available. Processing with recursion enabled is the normal usage.

Where a query is answered non-recursively, the question name-server will give the answer only if it knows it. If it does not have the answer it will try to return any information that it has which will get host 10 'closer' to the answer. For example, it may return a list of name-servers that are knowledgeable for the domain in the query. Assuming that host 10 did not have this information about the domain, it can now query one of these more knowledgeable servers with a good chance of getting the right answer.

If the query is posed recursively, then if the questioned name-server does not have the answer itself, it will attempt to find the answer by asking other name-servers and then return this result. In the case of the example above, the responding name-server may return a list of more knowledgeable name-servers, but it should also give the answer to the query, having itself asked one or more of the other name-servers for the final answer. (If this name-server did not directly have the answer, and recursion was still being used, it would ask another name-server which it knew about for the answer, and so on).

The nature of recursive and non-recursive queries may have an impact upon the way in which DNS caching is performed by a router. The aim of using transparent caches on the routers is to reduce latency, both for repeated queries, that is, cached response, and for initial queries, that is, uncached responses. The only way to reduce the latency for an initial query is to reduce the number of messages that have to be sent across the long latency link. It is likely that, if multiple steps are needed to answer a query, many of them will involve machines in the same local network. Therefore, when a query is passed to a paired router for processing, it should request recursion. Thus, if multiple sub-queries are required and all use machines in the remote network, no additional long latency link traffic is required.

A problem which may occur is that a request for a response from a name-server which is quoted as an authority for the domain in a previous response is deliberately requested by host 10, and the request is spoofed, that is, intercepted and answered by the local transparent cache which cannot respond authoritatively.

It is unlikely that a resolver will 'insist' on an authoritative answer ([RFC1034] recommends only that authoritative answers are used in preference to cached answers, if available), but if the only authoritative name-server is in the remote network, transparent caching will never let the local host get directly at that name-server.

Note that a resolver does not explicitly ask for an authoritative answer, but does so implicitly by requesting data directly from an authoritative server.

Since there is no way of telling from a DNS query that an authoritative answer is specifically being sought, it is impossible for the transparent cache to identify this requirement. However, it is considered extremely unlikely that a resolver would attempt to seek an authoritative answer having received a cached response. The only obvious reason for such a query is trouble-shooting or DNS database management.

If the transparent cache detects a duplicate request for a cached entry that is directed to the name-server known to be authoritative for that domain, it may prefer to pass the query through to the authoritative name-server. (It may still answer the query from the cache, although not authoritatively.)

There are two categories of name-server of interest here:- root name-servers and all the others.

A root name-server is one at which a (non-root) name server starts when trying to resolve a previously unseen domain name. If it has no idea who is authoritative for that domain, it starts with a root name-server. All name-servers are configured through a file at boot time with the identity of a set of root name-servers. The relevance of this is that queries to a root name-server are always non-recursive. Presumably this is to avoid overworking one of (in the global Internet) nine host machines.

Queries to other machines, as indicated in the previous discussion, are generally recursive. There is, however, no requirement for name-servers to make recursive queries. Therefore no assumptions should be made that queries will be recursive.

## Claims

1. A method for improving the performance of long latency or error prone links between a host and an external network, the method comprising the steps of:-
a) generating a domain name server query at the host;
b) intercepting the domain name server query;
c) passing the query to a transparent cache;
d) if the answer to the domain name server query is available in the cache, supplying the answer to the host as if from the requested domain name server;
e) if the answer is not available in the cache, routing the request to the requested domain name server;
f) receiving a response at the cache from the domain name server;
g) supplying the response to the host; and
h) storing the response in the transparent cache.

2. A method according to claim 1, wherein step f) further comprises the steps of:-
(i) determining if the response received at the cache provides a complete answer;
(ii) generating a follow up query if the response is not a complete answer; and
(iii) repeating steps (i) and (ii) until a substantially complete answer is obtained.

3. A method according to claim 1 or 2, wherein steps b) and c) are carried out by a router associated with the host.

4. A method according to any one of claims 1 to 3, further comprising the step of associating a router and transparent cache with the external network, the transparent caches operating as co-operative pairs.

5. A method for improving the performance of long latency links between a host and an external network substantially as hereinbefore described with reference to Figures 2 and 3 of the accompanying drawings.
